# EUROPEAN PATENT SPECIFICATION

(11) **EP 2 659 262 B1**
(45) Date of publication and mention of the grant of the patent: **10.06.2015**
(21) Application number: 11749574.7
(22) Date of filing: 12.07.2011
(51) Int. Cl.: G01N 21/64, G01N 21/27, A01M 7/00

(54) **A METHOD OF MEASUREMENT OF AGROTECHNICAL SPRAYING, IN WHICH PARTS OF A PLANT COVERED WITH CHEMICAL SUBSTANCES, IN PARTICULAR AGROCHEMICALS, ARE ANALYZED.**
VERFAHREN ZUR MESSUNG EINER LANDWIRTSCHAFTSTECHNISCHEN BESPRÜHUNG MIT ANALYSE VON MIT CHEMISCHEN SUBSTANZEN, INSBESONDERE AGROCHEMIKALIEN, BESPRÜHTEN PFLANZENTEILEN
PROCÉDÉ DE MESURE D'UNE PULVÉRISATION AGROTECHNIQUE ET ANALYSE DES PARTIES D'UNE PLANTE COUVERTES DE SUBSTANCES CHIMIQUES, EN PARTICULIER, D'AGENTS AGROCHIMIQUES

(30) Priority: 30.12.2010 PL 39350210
(43) Date of publication of application: 06.11.2013
(73) Proprietor: PRZEMYSLOWY INSTYTUT MASZYN ROLNICZYCH, 60-963 Poznan (PL)
(72) Inventor: SOBKOWIAK, Boleslaw, PL-62-007 Biskupice (PL); GALLEWICZ, Wieslaw, PL-05-075 Warszwa- Wesola (PL); MAZIEJUK, Miroslaw, PL-05-091 Zabki (PL); ZIETEK, Stefan, PL-00-910 Warszawa (PL); POPLAWSKI, Zdzislaw, PL-00-382 Warszawa (PL)
(74) Representative: Kowalkiewicz, Wladyslaw
(86) International application number: PCT/PL2011/000073
(87) International publication number: WO 2012/091579

(56) References cited:
- US-A- 5 734 167
- US-A- 5 919 647

## Description

A method of measurement of agrotechnical spraying, in which parts of a plant covered with chemical substances, in particular agrochemicals, are analyzed.

The object of invention is a method of measurement of agrotechnical spraying, in which parts of a plant covered with chemical substances, in particular agrochemicals, used for protection of plants in agricultural cultivation, are analyzed.

The spraying process is inherently related to the phenomenon consisting in the fact, that a part of the produced aerosol is unintentionally carried off by air currents outside the protected area. Problems concerning the detection and limitation of the size and extent of drift are considered very important because of the threat it poses to the environment, including mainly the neighbouring crops, surface water, urban areas and protected areas where it can cause various damage and contamination. Until recently, the drifted working liquid was considered only as a source of economic loss and a threat to neighbouring crops. Currently, mainly the ecological dimension is emphasized, namely drift as a threat to humans, animals, water, soil and air. The drifted liquid can increase the local amount of plant protection agents, becoming a threat to the useful fauna and flora.

It is also important to estimate the evaporation process - or penetration into the plant. The method of induced luminescence at a differential measurement makes it possible to estimate this process.

Currently many different probes, mostly static, are used to capture the aerosol droplets which were carried off. They include paper and cellophane cards, dishes with silicone oil, glass plates, plasticized cuts of film tape, photo paper, long (30 m - 80 m) paper tapes spread horizontally, polystyrene tubes, etc. Due to the fact that static probes have a small capturing coefficient, for small droplets and slow wind speeds, a device is used which moves a sampler or sucks the air, which, passing the measuring device at a speed equal to the speed of wind, makes droplets of technological fluid aerosol deposit on the filter paper without interference caused by the object (isokinetic samplers). Probes are arranged horizontally or vertically on the crop, soil, or special devices: masts, props, balloons or airplanes.

The material deposited on samplers is analyzed using chemical methods: colorimetric, fluorimetric, and methods of gas-liquid chromatography.

Currently used methods of measuring the unintended drift of agrochemicals, observed on the basis of chemical analysis, are characterized by the following disadvantages:
- they are significantly work- and time-consuming, which is associated with the necessity to arrange and collect a large number of probes, and then delivering them to the laboratory and analyzing them;
- distribution of samples and chemical analysis can be performed only by specialized laboratories;
- decision to make the measurement need to be taken before the spraying, which excludes possible resolving of disputes concerning damage to plants on adjacent crops.

It is known from the Polish patent application No. P.375383 a method of identifying varieties of honey by fluorescence spectra analysis, using the phenomenon consisting in the fact, that each variety of honey has a specific fluorescence spectrum.

From the patent description No US 5734167, there is known the method of applying a product to vegetation or soil embodiment comprising the following steps: providing a product containing a fluorescent pigment or dye; providing a light source which emits wavelengths that will cause pigment or dye to fluoresce; applying the product onto the vegetation or soil; directing a light onto the vegetation or soil which will cause pigment or dye to fluoresce; detecting the fluorescence of the fluorescent pigment or dye.

From the patent description No US 5919647, there is also known a method for examining pathogen resistance or pathogen susceptibility of a plant, comprising the steps of: -dividing at least one sample of germinating seed of a plant to be examined into at least two divisions and shielding the at least two divisions from any external light, inoculating a pathogen comprising mold on a first division of the at least two divisions of the sample, leaving the first division standing in the dark for a predetermined period of time and measuring the quantity of luminescence S₁ emitted from the first division; inoculating a second division of the at least two divisions with substantially no pathogen and leaving said second division of the at least two divisions of the sample standing in the dark for a predetermined period of time, and measuring the quantity of luminescence C₁ emitted from the second division; and comparing the quantities of the luminescence emitted from the first and second divisions of the sample, thereby to examine the resistance or susceptibility of the plant to the pathogen in a manner such that when S₁ > C₁, the plant to be examined is judged to have pathogen resistance, and when C₁ > S₁, the plant to be examined is judged to have pathogen susceptibility.

The aim of the invention is to remove the inconvenience of the chemical methods of measuring the agrotechnical spraying, including monitoring the phenomenon of carrying off technological fluid while spraying the plants.

The subject of the invention is presented in two equivalent versions.

The subject of the method according to the first variant consists in that UV radiation is used in excitation bands 280 nm, 300 nm, 340 nm, 400 nm and 450 nm, exposed cyclically in turn for about 10 milliseconds to perform at least 20 measurements of the spectra of excited luminescence of a sprayed plant sample, and then a plant and a chemical substance used for spraying are identified by comparing the obtained spectra with the reference spectra contained in a computer database, and by means of the analysis of the amplitude of the signals of the chemical substance, its amount on the tested plant sample is determined.

The subject of the method according to the second variant consists in the fact, that in the first stage, UV radiation is used within the range from 280 to 450 nm, the excited luminescence spectrum of the sample of a non sprayed plant is measured and then the excited luminescence spectrum of the substance used for spraying is measured and they become reference spectra, both spectra being placed in a measuring device, and then a measurement of excited luminescence spectrum of a samples of a sprayed plant is measured and by using a computer program a differential analysis of this spectrum is made against the reference spectra and an analysis of the amplitude of the spectrum of the sprayed plant sample is made to determine the amount of a sprayed chemical substance.

The method enables identifying and quantifying the amount of the substance used to spray the cultivated plants with agrochemicals, also after the process of evaporation and penetration of agrochemicals into plants.

Features of this solution are as follows: the tested preparation does not require sample pretreatment and the measurement consists of two stages. Stage one: measurement of the background, determination of luminescence characteristics of the plant for which we want to determine the type and extent of the application of spraying. Stage two: measurement of luminescence of a sprayed plant. After deduction of the background we determine the degree of spraying or lack of spraying. This method enables designation of spraying drift even in a few hours after performing it.

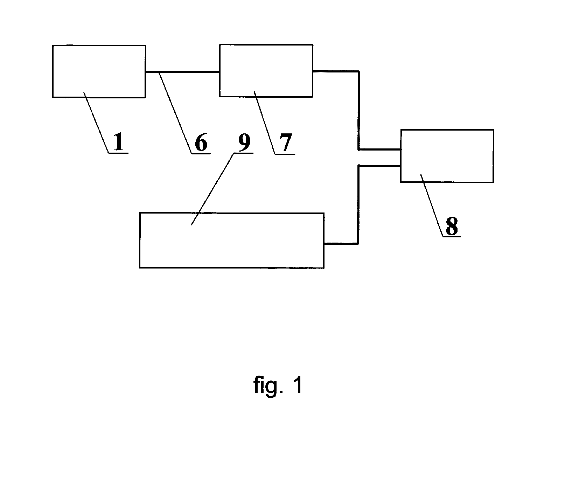

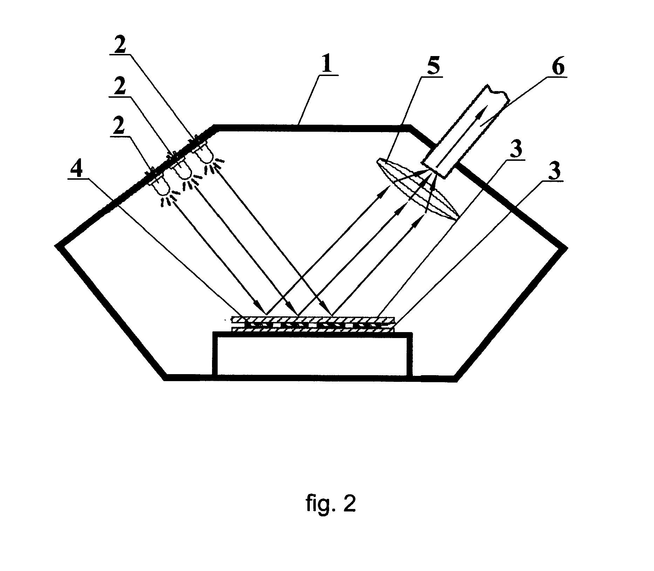

The object of invention is presented in the drawing, wherein Fig. 1 shows a block diagram, and Fig. 2 - a measurement chamber.

The device is composed of the following units: the measurement chamber 1, an optical spectrometer 7 working in UV range, computer 8 with software that contains a database of the excitation-emission spectra 9.

The measurement chamber 1 consists of a lightproof casing with the following elements inside: a source of UV radiation 2, preferably in the form of a light-emitting diode, the sample holder assembly, the essential part of which are two plates 3 made of quartz glass, between which the sample is placed during the measurement 4, an optical system 5 introducing the emission spectrum of the sample to the optical fibre 6 that transmits the spectrum to a standard UV spectrometer 7.

A standard computer includes software with database of the excitation-emission spectra of a chemical substances to be identified and background, i.e. objects on which these the chemical substances are located, that is particularly plants.

With a solution according to invention the excited luminescence spectra of plants covered with the chemical substances, in particular agrochemicals, are analyzed. The analysis is based on differential identification of a plant and the chemical substance by comparing the spectra obtained with the reference spectra contained in a computer database, while the amplitude of the signals of the chemical substance enables determination of its amount. In addition, the invention enables creating and extending the base of the spectra of model plants and the chemical substances.

The sample collected 4, especially leaves of plants from plantations sprayed with agrochemicals, is placed in the chamber between the plates 3 and plates made of quartz glass, transmitting UV radiation. Chamber 1 is provided with a lightproof casing which eliminates interference from external light radiation. The sample is illuminated with a UV light source 2, preferably using UV light-emitting diodes. High-energy UV radiation falling on the sample causes emission of a spectrum whose characteristics depend on the type and amount of substance with which the sample is covered. The excitation bands used are as follows: 280 nm, 300 nm, 340 nm, 400 nm and 450 nm. Each of these wavelengths is assigned to a variety of diodes; they are turned on cyclically for approximately 10 msec. While each of the light emitting diodes is illuminated, separate emission spectra are collected from a sample of the tested material. The whole cycle is repeated many times, preferably twenty times, to separate itself from the detector noise. Light-emitting diodes are not strong light sources, but their power is sufficient for detection systems to record luminescence. A single measurement takes about 2 minutes and a background measurement lasts for the same time. The measurements are made on an impulse basis and the time of a single excitation of a sample is adjusted to the time of radiation emission of the sample, recorded by a spectrometer.

Using the optical system 5 and optical fibre 6 the emission spectrum is sent to a standard UV spectrophotometer with a measuring range 300 - 1000 nm, which creates a cumulative spectral characteristic, including designated substances contained in the sample. A summarized spectral characteristic is passed to a computer 8 which, using special software, differentiates the collective spectre into spectra of various substances contained in the sample, by comparison with reference spectra of substances present in the database 9.

It is also possible to use a different measurement mode in which two samples are analyzed subsequently: a physical object, for which is certain that is not covered with a chemical substance and the same object covered with the substance. The differential signal of the two spectra contains then only the spectrum of the wanted chemical substance that is identified by comparison with the spectra present in the database.

Use of a lightproof head with a matrix of transmitting UV diodes and a mini-spectrometer with a UV measuring range considerably reduces the cost of UV excitation. Moreover, the use of diodes generating selected wavelengths of electromagnetic radiation from the UV range simplifies the process of analyzing these spectra without the necessity to analyze the background and the light intensity for characteristic peaks.

In the process of testing of plant protection products, it turned out that they are very specific - and the novelty is to develop a method for distinguishing these products from the background, which are plants, also emitting a characteristic spectrum in the ultraviolet.

## Claims

1. A method of measurement of agrotechnical spraying, in which parts of a plant covered with chemical substances, in particular agrochemicals, are analyzed by comparison with reference spectra from a database, **characterized in that,** UV radiation is used in excitation bands 280 nm, 300 nm, 340 nm, 400 nm and 450 nm, exposed cyclically in turn for about 10 milliseconds to perform at least 20 measurements of the spectra of excited luminescence of a sprayed plant sample, after which a plant and chemical substance are identified by comparing the obtained spectra with the reference spectra contained in a computer database, and through the analysis of the amplitude of the signals of the chemical substance, its amount on the tested plant sample is determined.

2. A method of measurement of agrotechnical spraying, in which parts of a plant covered with chemical substances, in particular agrochemicals, are analyzed by comparison with references from a database, **characterized in that,** in the first stage, using UV radiation within the range from 280 to 450 nm, the excited luminescence spectrum of the sample of a non sprayed plant is measured and then the excited luminescence spectrum of the substance used for spraying is measured and they become reference spectra, both spectra being placed in the database of a measuring device, and then a measurement of excited luminescence spectrum of a sample of a sprayed plant is measured and by using a computer program a differential analysis of this spectrum is made against the reference spectra and an analysis of the amplitude of the spectrum of the sprayed plant sample is made to determine the amount of the sprayed chemical substance.

## Patentansprüche

1. Verfahren zur Messung einer landwirtschaftstechnischen Besprühung, in dem mit chemischen Substanzen, insbesondere Agrochemikalien, bedeckte Pflanzenteile mittels eines Vergleichs mit Referenzspektren aus einer Datenbank analysiert werden, **dadurch gekennzeichnet, dass** UV-Strahlung in Anregungsbändern von 280 nm, 300 nm, 340 nm, 400 nm und 450 nm verwendet wird, zyklisch abwechselnd für ungefähr 10 Millisekunden bestrahlt wird, um mindestens 20 Messungen von Spektren der angeregten Lumineszenz einer besprühten Pflanzenprobe durchzuführen, wonach die Pflanze und die chemische Substanz mittels des Vergleichs der erhaltenen Spektren mit in einer Computerdatenbank enthaltenen Referenzspektren identifiziert werden, und mittels einer Analyse der Signalamplitude der chemischen Substanz deren Menge auf der untersuchten Pflanzenprobe bestimmt wird.

2. Verfahren zur Messung einer landwirtschaftstechnischen Besprühung, in dem mit chemischen Substanzen, insbesondere Agrochemikalien, bedeckte Pflanzenteile mittels eines Vergleichs mit Referenzspektren aus einer Datenbank analysiert werden, **dadurch gekennzeichnet, dass** im ersten Schritt das Spektrum der angeregten Lumineszenz einer unbesprühten Pflanzenprobe, unter Verwendung einer UV-Strahlung im Bereich von 280 bis 450 nm, gemessen wird, und danach das Spektrum der angeregten Lumineszenz der zur Besprühung verwendeten Substanz gemessen wird, und diese zu Referenzspektren werden, wobei die beiden Spektren in der Datenbank einer Messvorrichtung hinterlegt werden, und danach eine Messung des Spektrums der angeregten Lumineszenz einer besprühten Pflanzenprobe durchgeführt wird, und unter Verwendung eines Computerprogramms eine Differentialanalyse dieses Spektrums gegen die Referenzspektren, und eine Analyse der Amplitude des Spektrums der besprühten Pflanzenprobe durchgeführt wird, um die Menge der gesprühten chemischen Substanz zu bestimmen.

## Revendications

1. Un procédé de mesure d'une pulvérisation agrotechnique, dans lequel les parties d'une plante recouvertes de substances chimiques, en particulier d'agents agrochimiques, sont analysées par comparaison avec les spectres de référence d'une base de données, **caractérisé en ce que** le rayonnement UV est utilisé dans des bandes d'excitation de 280 nm, 300 nm, 340 nm, 400 nm et 450 nm, exposées cycliquement, de manière successive pendant environ 10 millisecondes pour effectuer au moins 20 mesures du spectre de luminescence excitée d'un échantillon d'une plante pulvérisée, après quoi une plante et substances chimiques sont identifiées en comparant les spectres obtenus avec les spectres de référence contenus dans une base de données, et par l'analyse de l'amplitude des signaux de la substance chimique sa quantité sur l'échantillon de la plante examinée est déterminée.

2. Un procédé de mesure d'une pulvérisation agrotechnique, dans lequel les parties d'une plante recouvertes de substances chimiques, en particulier d'agents agrochimiques, sont analysées par comparaison avec les références d'une base de données, **caractérisé en ce que** dans la première étape, en utilisant le rayonnement UV dans la plage de 280 à 450 nm, le spectre de luminescence excitée de l'échantillon d'une plante non pulvérisée est mesuré et ensuite le spectre de luminescence excitée de la substance utilisée pour la pulvérisation est mesuré et ils deviennent des spectres de référence, les deux spectres étant placés dans la base de données d'un dispositif de mesure, et ensuite une mesure du spectre de luminescence excitée d'un échantillon d'une plante pulvérisée est réalisée, et en utilisant un programme informatique une analyse différentielle de ce spectre est réalisée par rapport au spectre de référence et une analyse de l'amplitude du spectre de l'échantillon d'une plante pulvérisée est réalisée pour déterminer la quantité de la substance chimique pulvérisée.
